# DEMANDE DE BREVET EUROPEEN

(11) **EP 0 612 991 A1**
(43) Date de publication de la demande: **31.08.1994**
(21) Numéro de dépôt: 93400494.6
(22) Date de dépôt: 25.02.1993
(51) Int. Cl.: G01L 3/14, G01M 17/00

(54) **Dispositif de mesure de couple entre un ensemble moteur et un ensemble charge**

(71) Demandeur: Fuchs, Daniel, F-34970 Lattes (FR)
(72) Inventeur: Fuchs, Daniel, F-34970 Lattes (FR)
(74) Mandataire: Ravina, Bernard

(57) **Abrégé**

Le dispositif de mesure de couple s'intercale entre un ensemble moteur (2) et un ensemble charge (3) et comprend
- un moyen de mesure du couple transmis entre l'ensemble moteur (2) ou l'ensemble charge (3),
- un moyen de mesure du couple absorbé ou restitué par l'accélération angulaire des masses rotatives situées entre le moyen de mesure du couple transmis et l'endroit où le couple est recherché.
- un moyen pour additionner algébriquement la valeur de ces deux couples, le résultat de cette addition algébrique étant représentatif de la valeur du couple recherché à l'endroit prédéterminé, cette valeur serait celle obtenue si la mesure pouvait être effectuée en régime rigoureusement stationnaire.

## Description

La présente invention a pour objet un dispositif de mesure en régime transitoire d'un couple consommé par une machine ou fourni par un moteur, interposé cinématiquement entre un ensemble moteur et un ensemble charge et apte à déterminer la valeur du moment du couple appliqué sur l'un des organes des chaines cinématiques le reliant au moteur et à la charge, cette valeur étant celle qui serait obtenue par un dispositif placé à cet endroit ou par mesure en régime rigoureusement stationnaire après prise en compte des rapports et des rendements de transmission entre l'endroit où est effectué la mesure et l'endroit où l'on veut connaître le couple.

Les dispositifs de mesure du moment d'un couple s'intègrent notamment dans des bancs d'essai, la valeur du moment du couple étant utile pour le calcul des puissances et dans les installations industrielles, leur rôle étant alors lié à la sécurité.

Dans le domaine des bancs d'essai, il existe un certain nombre de procédés et dispositifs pour mesurer la puissance délivrée par un véhicule, le banc d'essai opposant lui même la charge résistant à la puissance à mesurer. Il y a trois types de charge possibles : le permier emmagasine l'énergie délivrée par le moteur à l'aide de volant(s) d'inertie ; le second dissipe l'énergie à l'aide d'un dispositif de freinage (à courants de Foucault par exemple), le troisième est un panachage des deux types de charge précédents, c'est-à-dire, énergie cinétique plus travail dissipé.

Concernant le premier type de charge, le couple ne se mesure pas mais se calcule en multipliant l'accélération angulaire par le moment d'inertie des masses tournantes du banc. Parfois, on calcule les pertes dues aux frottements, et hydrodynamiques en laissant ces pertes ralentir les masses tournantes du banc et du véhicule moteur débrayé et en faisant la multiplication ci-dessus pour obtenir le couple dû aux pertes. Le résultat de l'addition des puissances calculées en phases accélération (à la roue) et décélération (pertes de transmission) est donné comme étant représentatif de la puissance du moteur après prise en compte du rendement de la transmission du véhicule. Cette façon de faire présente plusieurs inconvénients :
1A/ Imprécision due en partie à l'absence de prise en compte de l'inertie des masses rotatives du véhicule (moteur, transmission, roues motrices) réduisant l'accélération angulaire du banc par le couple absorbé dans leur propre accélération.
   De plus, si le procédé prévoit la mesure des pertes décrites ci-dessus, l'énergie cinétique emmagasinée dans la rotation des masses d'inertie du véhicule s'ajoutera à l'énergie cinétique du banc, provoquant alors une moins grande décélération angulaire. Le chiffrage du couple dû aux pertes sera alors sous-évalué.
   Etant donné l'addition faite de ces deux couples, en vue d'obtenir la puissance en sortie d'arbre moteur, la non prise en compte de l'inertie des masses rotatives du véhicule entache deux fois d'erreur le résultat final. Quant aux rendements de transmissions, leur prise en compte se fait par application du coefficient moyen correspondant.
2A/ Caractéristiques figées de la charge : impossibilité d'y prélever la puissance destinée à des accessoires comme une turbine de refroidissement.
   Un procédé tel que décrit ici est exact pour le chiffrage de la force d'accélération du véhicule effectivement disponible aux roues par un rapport de transmission donné.
   En ce qui concerne le deuxième type de charge, par freinage, la mesure du couple se fait après l'obtention d'un régime fixe par réglage du frein afin qu'une accélération angulaire des masses rotatives du banc n'affecte pas la fiabilité de la mesure.
   Les inconvénients de cette façon de procéder sont les suivants :
1B/ complexité liée à l'obtention de régimes fixes (plusieurs brevets proposent des solutions par asservissement du frein),
2B/ grand nombre de régime fixe à marquer dans le cas où l'on souhaite avoir une suite de résultats sous forme de courbes,
3B/ difficulté de procéder aux mesures des couples dus aux pertes à chacun des régimes où furent effectuées les mesures de couples moteur, d'où l'obtention aléatoire des résultats "en sortie de vilebrequin" à partir des résultats mesurés "à la roue".
   En effet, il faudrait pour mesurer le couple dû aux pertes, équiper le banc d'un moteur électrique suffisamment puissant pour entrainer l'ensemble banc et transmission du véhicule aux régimes fixes correspondants. Si les pertes par frottements dans les paliers sont à peu près indépendantes du régime, il n'en est pas de même pour les pertes dues aux frottements hydrodynamiques (barbotage dans l'huile, etc...).
   Enfin, le troisième type de charge, comme connu du brevet FR-A-2 087 958, regroupe le volant d'inertie et le frein.
   Ce brevet peut être résumé ainsi :
   Le frein est asservi pour donner aux masses rotatives du banc une accélération constante connue, évitant ainsi sa mesure. Connaissant le moment d'inertie et l'accélération angulaire, on connait le couple absorbé par l'accélération des masses rotatives du banc. Par ailleurs, le couple dissipé par le frein dynamométrique, dont le stator est monté oscillant, est mesuré. Une addition du couple connu (accélération) et du couple mesuré (frein) donne le couple à la roue du véhicule en essai sur le banc. Le frein permet aussi d'obtenir une accélération nulle ou négative.
   Un des avantages mentionnés réside dans la non nécessité d'obtention de régime fixe, bien qu'utilisant un frein à courants de Foucault. Ce procédé remédie aux inconvénients 1B, 2B et 3B mais présente les suivants :
1C/ non prise en compte du moment d'inertie équivalent des masses rotatives du véhicule,
2C/ complexité (asservissement),
3C/ caractéristiques figées de la charge ; impossibilité de prélèvement de puissance pour des accessoires.
   En conclusion, avec les dispositifs de mesure de couple connus une imprécision apparaitra si l'on souhaite mesurer en régime transitoire, le couple en un endroit inaccessible d'une chaine cinématique entre un moteur et une charge et situé ailleurs que l'endroit où peut être placé le dispositif de mesure, par exemple, si l'on veut connaitre le couple moteur, sans tenir compte des inerties et que l'on effectue la mesure aux roues toujous en régime transitoire .
   Les mêmes sources d'erreurs que celles précédemment mentionnées apparaitront, soit la non prise en compte :
1D/ de l'inertie des masses rotatives intermédiaires, lesquelles sont les masses rotatives de la chaine cinématique placées entre l'endroit où l'on veut connaître le couple et l'endroit où l'on peut faire les mesures qui sont, selon l'exemple précité, le vilebrequin, la transmission, les roues, et divers accessoires tournants.
2D/ des pertes par frottements d'organes (transmission et pneumatiques).
   Cet aperçu des différents problèmes posés par les procédés et dispositifs existants pour les bancs d'essai de véhicule et pour l'industrie permet de constater :
   a/ que l'inconvénient 1A, 1C, 1D serait supprimé si l'on prenait en compte le couple dû à l'accélération des masses rotatives intermédiaires,
   b/ que l'inconvénient 2A et 3C disparaitrait si l'on faisaint la mesure du couple entre moteur et charge plutôt que d'en faire le calcul à partir de l'accélération angulaire et du moment d'inertie du banc,
   c/ que l'inconvénient 1B, 2B, 3B et 2D serait supprimé si l'on pouvait effectuer les mesures en régime transitoire, procédé permettant de lancer l'ensemble pour le laisser être freiné par les pertes à mesurer. A noter la nécessité de désaccoupler la machine entrainée à l'endroit où l'on veut connaître les couples, afin d'isoler les masses rotatives intermédiaires pour la mesure de leurs pertes par frottements.

La présente invention a donc pour objet un dispositif de mesure de couple apte à indiquer la valeur du couple en régime transitoire en un endroit précis d'une chaine cinématique alors qu'il est placé ailleurs sur cette chaine, le dispositif répondant aux exigences a, b et c dernièrement citées.

A cet effet, le dispositif de mesure de couple en régime transitoire disposé entre un ensemble moteur (2) et un ensemble charge (3), la transmission du mouvement de rotation entre l'ensemble moteur et l'ensemble charge étant assurée par le dit dispositif de mesure ou bien par un arbre tournant (7) accouplé à ces deux ensembles, l'ensemble moteur (2) étant constitué d'un moteur et pouvant comporter une première chaine cinématique de transmission du mouvement de rotation entre le moteur et le dispositif de mesure ou l'arbre tournant et éventuellement au moins une deuxième chaine cinématique de transmission du mouvement de rotation entre un des organes rotatifs de la première chaine cinématique et un organe récepteur, l'ensemble charge (3) étant constitué d'une charge et pouvant comporter une première chaine cinématique de transmission du mouvement de rotation entre la charge et le dispositif de mesure ou l'arbre tournant (7) et éventuellement au moins une deuxième chaine cinématique de transmission du mouvement de rotation entre un des organes rotatifs de la première chaine cinématique de l'ensemble charge et un autre organe récepteur, le dit dispositif indiquant la valeur du couple qui est appliqué en un endroit prédéterminé de l'une quelconque première chaine cinématique, au rendement de transmission près, valeur du couple qui serait appliqué sur le dit dispositif 1, au rendement de transmission près, si la mesure pouvait être effectuée en régime rigoureusement stationnaire se caractérise essentiellement en ce qu'il comporte :
- un moyen de mesure de la valeur du couple entre l'ensemble moteur et l'ensemble charge,
- un moyen de mesure de la valeur du couple absorbé ou restitué d'une part, par l'accélération angulaire de masses rotatives intermédiaires situées entre le moyen de mesure du couple entre l'ensemble charge et l'ensemble moteur, et l'endroit de la première chaine cinématique où l'on veut connaître le couple et d'autre part éventuellement par l'accélération angulaire des masses rotatives de la deuxième chaine cinématique en prise avec cette première chaine cinématique,
- un moyen pour additionner algébriquement ces deux valeurs et délivrer sous forme de signal le résultat de cette addition, la valeur résultat de cette addition algébrique étant représentative de la valeur du couple à l'endroit prédéterminé, l'addition algébrique corrigeant donc l'erreur venant de l'intégration ou de la non-intégration, selon que l'endroit appartient à l'ensemble moteur ou à l'ensemble charge, du couple consommé par l'accélération des masses rotatives précitées.

D'autres avantages, caractéristiques et but de la présente invention apparaitront à la lecture de la description de formes préférées de réalisation du dispositif données à titre d'exemple non limitatif en se référant aux dessins ci-joints en lesquels :
- la figure 1 est une vue schématique d'un ensemble moteur, d'un ensemble charge et d'un dispositif de mesure de couple disposé entre ces deux ensembles,
- la figure 2 est une vue en perspective d'une première forme de réalisation du dispositif de mesure,
- la figure 3 est une vue schématique illustrant le fonctionnement du dispositif selon la figure 1,
- la figure 4 est une vue en coupe selon le plan A/A de la figure 2,
- la figure 5 est une vue de détail montrant la liaison du dispositif de mesure au capteur d'effort,
- les figures 6 et 7 sont des vues de détail montrant la liaison entre le volant d'inertie et la transmission de mouvement associée au dit volant,
- la figure 8 est une vue en perspective d'une seconde forme de réalisation du dispositif selon l'invention,
- la figure 9 est une vue en coupe longitudinale du dispositif selon la deuxième forme de réalisation,
- la figure 10 est une perspective partielle du dispositif selon la deuxième forme de réalisation,
- la figure 11 est une vue en perspective du dispositif selon une troisième forme de réalisation du dispositif selon l'invention,
- la figure 12 est une vue de dessus du dispositif selon la troisième forme de réalisation,
- la figure 13 est une vue schématique d'un dispositif selon une quatrième forme de réalisation.

Dans la présente description, le couple absorbé ou restitué d'une part par l'accélération angulaire des masses rotatives intermédiaires de la première chaine cinématique situées entre le moyen de mesure du couple entre l'ensemble charge et l'ensemble moteur, et l'endroit de la première chaine cinématique où le couple est recherché et d'autre part par l'accélération angulaire des masses rotatives de la deuxième chaine cinématique en prise avec cette première chaine cinématique sera désigné par couple absorbé ou restitué par l'accélération angulaire des masses rotatives. Il est à noter que cette accélération peut être positive (couple absorbé) ou négative (couple restitué). Par ailleurs, les masses rotatives pourront comporter aussi celles du moteur ou de la charge.

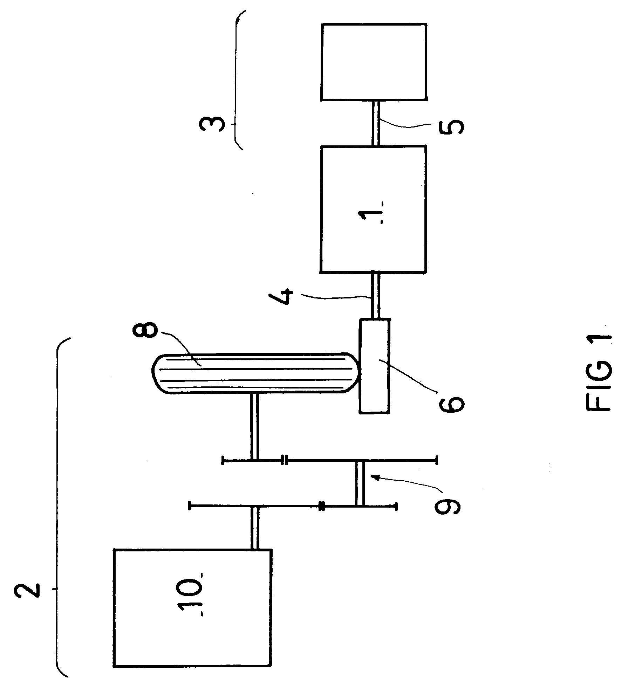

En outre, dans la présente description on entend par moment d'inertie équivalent, un moment d'inertie qui est fonction du moment d'inertie des masses rotatives précédemment citées et des rapports de transmission entre elles.
En figure 1, on a representé de manière schématique un dispositif de mesure de couple 1 intercalé cinématiquement entre un ensemble moteur 2 et un ensemble charge 3, la transmission du mouvement de rotation entre ces deux ensembles peut être assurée par le dispositif de mesure.

Suivant ce cas de figure, le dispositif de mesure est disposé entre deux arbres tournants coaxiaux 4 et 5 écartés axialement l'un de l'autre et à chacun desquels est accouplé le dispositif de mesure.
Ces arbres coaxiaux sont montés en rotation dans des paliers supportés par un bâti fixe recevant le dispositif de mesure.

Un des arbres tournants sera considéré comme faisant partie de l'ensemble moteur tandis que l'autre sera considéré comme faisant partie de l'ensemble charge.

La transmission du mouvement de rotation entre l'ensemble moteur 2 et l'ensemble charge 3 peut être assurée par un arbre tournant unique 7 accouplé aux deux ensembles 2 et 3 et monté en rotation sur au moins deux paliers solidaires d'un châssis fixe sur lequel est monté le dispositif de mesure.

Suivant ce cas de figure, le dispositif de mesure de couple sera associé au dit arbre tournant et cet arbre tournant sera considéré tantôt comme faisant partie de l'ensemble charge 3 tantôt comme faisant partie de l'ensemble moteur 2.

Par ailleurs, l'un des arbres tournants 4, 5 ou bien l'arbre tournant unique 7 pourra recevoir en fixation un rouleau 6 entrainé en rotation par un organe rotatif de l'ensemble moteur 2 ou de l'ensemble charge 3, ce dit rouleau sera considéré comme faisant partie de l'ensemble moteur s'il est entrainé en rotation par un organe du dit ensemble ou comme faisant partie de l'ensemble charge s'il entraine en rotation un des organes de l'ensemble charge.

Dans le cas de figure représenté en figure 1, l'ensemble moteur comprend le groupe de propulsion d'un véhicule, le rouleau 6 et l'arbre 4, 5 ou 7 sur lequel est calé le rouleau, le dit rouleau recevant son mouvement de rotation de la roue 8 du groupe de propulsion du véhicule, laquelle est entrainée en rotation par une transmission de mouvement 9 accouplée à l'arbre de sortie d'un moteur thermique 10, du groupe de propulsion, le moteur thermique, dans le cas présent, étant générateur des couples à mesurer. La première chaine cinématique, dans cet exemple, sera constituée par l'arbre 4, le rouleau 6, la roue 8 et la transmission 9, cette chaine cinématique ayant un moment d'inertie équivalent fonction du moment d'inertie de chacun de ses composants et des rapports de transmission entre-eux. L'un des organes rotatifs du groupe propulseur tel que défini peut être accouplé une deuxième chaine cinématique comportant un organe récepteur recevant son mouvement de rotation du dit organe par l'intermédiaire d'une transmission de mouvement, par exemple, cette chaine cinématique comporte un alternateur.

L'ensemble charge dans ce cas peut être constitué par tout élément opposant en régime de rotation transitoire, c'est-à-dire, accéléré un couple résistant.

Le dispositif de mesure est destiné, par exemple, à indiquer la valeur du couple au niveau de l'arbre de sortie du moteur thermique 10, la valeur indiquée étant celle qui serait obtenue en effectuant la mesure directement sur l'arbre de sortie après l'avoir désaccouplé de la transmission de mouvement le reliant à la roue.

D'une autre manière, cette valeur serait celle qui serait obtenue par exemple au niveau de la roue ou en un autre endroit si la mesure pouvait être effectuée en régime de rotation rigoureusement stationnaire en prenant en compte les rendements de transmission et éventuellement les rapports de transmission.

Dans le cas où l'on souhaite maintenant obtenir le couple du moteur thermique, valeur qui serait obtenue si la mesure est effectuée en régime stationnaire, le vilebrequin et son volant d'inertie seront considérés comme faisant partie de la première chaine cinématique.

Il est à noter que la fiabilité des mesures n'est pas affectée par une modification de la charge qui peut être aussi bien un volant d'inertie, un frein ou les deux comme l'adjonction d'une turbine aéraulique de forte puissance à un volant d'inertie.

Le dispositif de mesure est parfaitement reversible et peut être utilisé aussi pour mesurer le couple consommé par une machine entrainée, la dite machine étant considérée alors comme une charge. Cet exemple peut être illustré par la figure 1, l'ensemble 2 tel que précédemment défini est la machine entrainée tandis que l'ensemble 3 est constitué par un moteur électrique de forte puissance et à faible vitesse de rotation. Dans ce cas, il est possible , par exemple, d'évaluer les compressions du moteur du groupe de propulsion, le dit moteur ne fournissant plus d'énergie et étant en prise avec la transmission du mouvement. Il faut noter que la fiabilité des mesures des couples consommés par une machine n'est pas affectée si cette dernière oppose des fluctuations de couple (cas du moteur) ou des régimes sucessivement accélérés ou décélérés. Egalement dans ce cas de figure, la valeur du couple consommé indiquée par le dispositif de mesure pour un endroit quelconque prédéterminé de la chaine cinématique de l'ensemble charge, par exemple au niveau de l'arbre de sortie du moteur, est celle qui serait mesurée par un dispositif de mesure directement relié au dit arbre de sortie après avoir désaccouplé le dit arbre, de la transmission de mouvement.

Pour parvenir au but de l'invention, le dispositif de mesure comporte :
- un moyen de mesure de la valeur du couple entre l'ensemble moteur et l'ensemble charge,
- un moyen de mesure de la valeur du couple absorbé ou restitué d'une part, par l'accélération angulaire de masses rotatives intermédiaires situées entre le moyen de mesure du couple entre l'ensemble charge et l'ensemble moteur, et l'endroit de la première chaîne cinématique où l'on veut connaître le couple et d'autre part éventuellement par l'accélération angulaire des masses rotatives de la deuxième chaine cinématique en prise avec cette première chaine cinématique,
- un moyen pour additionner algébriquement ces deux valeurs et délivrer sous forme de signal le résultat de cette addition, la valeur résultat de cette addition algébrique étant représentative de la valeur du couple à l'endroit prédéterminé, l'addition algébrique corrigeant donc l'erreur venant de l'intégration ou de la non-intégration, selon que l'endroit appartient à l'ensemble moteur ou à l'ensemble charge, du couple consommé par l'accélération des masses rotatives précitées.

Le moyen de mesure du couple entre l'ensemble moteur et l'ensemble charge peut assurer la transmission du mouvement de rotation entre ces deux ensembles et dans ce cas de figure, les deux ensembles sont équipés des arbres tournants coaxiaux 4 et 5. Le moyen de mesure de couple est alors accouplé à ces deux arbres tournants.

Le moyen de mesure de couple entre l'ensemble moteur 2 et l'ensemble charge 3 peut être solidaire d'un des organes de l'ensemble moteur ou de l'ensemble charge. Dans ce cas de figure, l'ensemble charge et l'ensemble moteur sont accouplés l'un à l'autre et par l'intermédiaire de l'arbre tournant 7.

Le moyen de mesure de couple peut être constitué par un torsiomètre auquel cas il sera monté sur l'arbre 7. Des torsiomètres sont notamment connus du brevet US-A-4 809 557.

Le moyen de mesure du couple absorbé ou restitué par l'accélération angulaire des masses rotatives simule les effets de l'accélération de ces masses en générant un effort proprortionnel à l'accélération et représentatif du couple absorbé ou restitué.

Selon la forme préférée de réalisation, le moyen de mesure du couple absorbé ou restitué par l'accélération angulaire des masses rotatives, comprend un système d'inertie composé notamment par un volant d'inertie rotatif, entrainé en rotation par une transmission de mouvement, laquelle reçoit le mouvement à transmettre de l'ensemble moteur ou de l'ensemble charge ou de l'arbre rotatif reliant les deux ensembles, la cinématique du dit système générant un effort dont la valeur est représentative du couple absorbé ou restitué par l'accélération angulaire des masses rotatives.

Par ailleurs, la cinématique générant l'effort représentatif du couple absorbé ou restitué par l'accélération angulaire des masses rotatives est modifiable afin d'adapter l'intensité de cet effort au moment d'inertie équivalent des masses précitées.

Cette caractéristique est particulièrement avantageuse puisqu'elle permet le choix de l'endroit où l'on veut connaitre le couple et/ou d'adapter rapidement le dispositif à un changement de moment d'inertie équivalent résultant d'un changement d'un rapport de transmission, par exemple, le changement de rapport de boîte de vitesses d'un véhicule en essai.

Il y a lieu de noter que le moyen de mesure du couple entre l'ensemble charge et l'ensemble moteur et le moyen de mesure du couple absorbé ou restitué par l'accélération des masses rotatives pourront comporter des organes communs. Le moyen pour additionner algébriquement les deux valeurs du couple pourra également comporter des organes communs aux deux moyens précités.

L'addition algébrique peut être opérée par voie mécanique et le résultat est donné par un capteur unique soumis à un premier effort représentatif de la valeur du couple entre l'ensemble moteur et l'ensemble charge et à un second effort représentatif du couple absorbé ou restitué par l'accélération angulaire des masses rotatives.

Cette addition peut être opérée également par voie électronique par exemple par un amplificateur opérationnel recevant, d'un premier capteur de mesure de l'effort représentatif du couple entre l'ensemble moteur et l'ensemble charge, une tension électrique dont la valeur est représentative de la valeur de ce couple et d'un second capteur de mesure de l'effort représentatif de la valeur du couple absorbé ou restitué par l'accélération des masses rotatives, une tension électrique dont la valeur est représentative de la valeur du couple absorbé ou restitué.

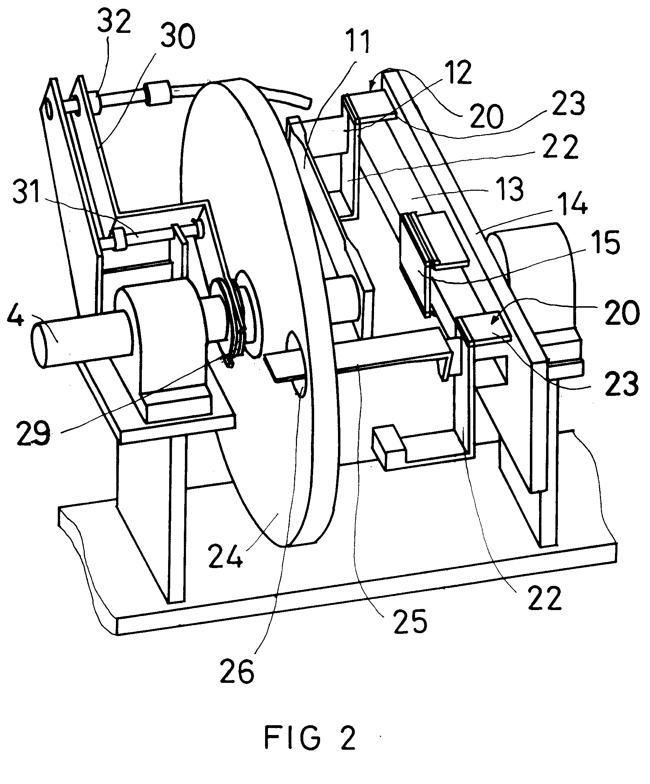

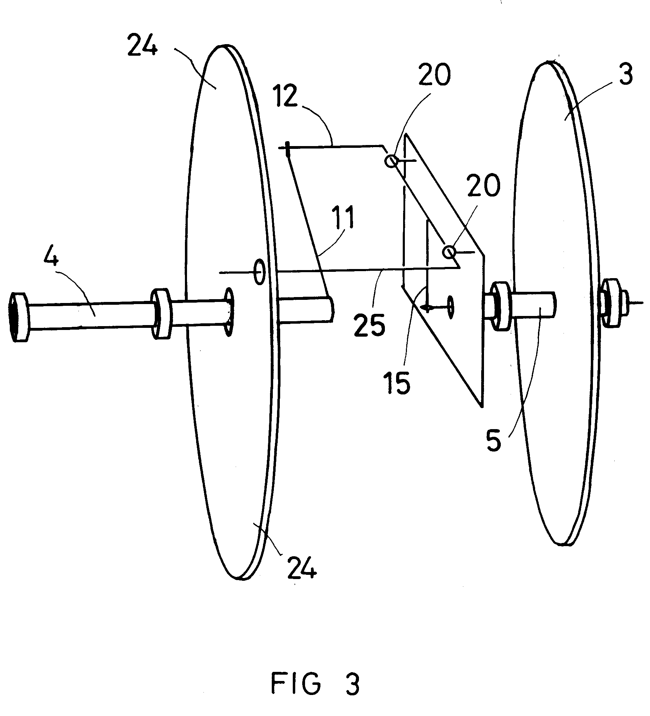

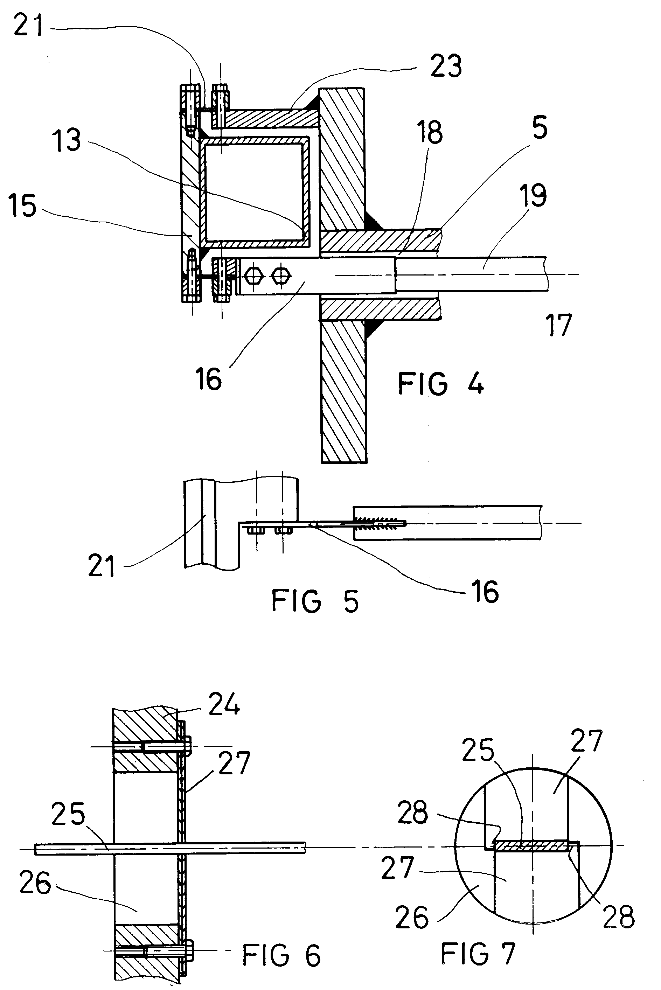

En se référant aux figures 2 à 7 on va décrire maintenant une première forme de réalisation d'un dispositif selon l'invention. On peut voir sur les figures 2 et 3 que le dispositif 1 de mesure de couple est intercalé entre les arbres tournants 4 et 5 et qu'il est accouplé par son moyen de mesure du couple entre l'ensemble charge et l'ensemble moteur aux deux arbres tournants 4 et 5.

Le dispositif de mesure de couple comprend un premier bras 11 fixé radialement par une de ses extrémités en extrémité des arbres tournants, par exemple l'arbre 4, une lame 12 s'étendant de manière perpendiculaire au dit bras, articulée à distance de l'axe de l'arbre 4, par une de ses extrémités, au bras 11 et fixée par son autre extrémité à un second bras 13 perpendiculaire à l'axe des arbres tournants 4 et 5 et articulé suivant un axe d'articulation perpendiculaire à l'axe des arbres 4 et 5 à une platine 14 montée en fixation en extrémité de l'autre arbre tournant, c'est-à-dire, l'arbre 5.

Au bras 13 est fixé un levier 15 en extrémité libre duquel et à distance de l'axe d'articulation du bras 13, est articulée une biellette 16, laquelle est articulée par son autre extrémité, en extrémité d'un doigt 17 monté de manière mobile dans un logement axial 18 pratiqué dans le second arbre 5 et agissant sur un capteur d'effort 19 monté dans le logement axial 18 de l'arbre 5. Ce capteur d'effort délivre un signal dont la valeur de l'amplitude est représentative de l'intensité de l'effort que le doigt 17 lui applique.

La transmission du mouvement de rotation entre l'arbre 4 et l'arbre 5 est assurée par le bras 11, la lame 12 le deuxième bras 13, les articulations du bras 13 à la platine 14 et par la dite platine.

Les oscillations du second bras 13 sont minimes et l'amplitude de l'oscillation dépend de la course de l'organe mobile du capteur 19, cette course étant de l'ordre de quelques dixièmes de millimètres.

Le bras 11 et la lame 12 sont de sections rectangulaires minces, orientées de sorte à absorber de façon optimale par élasticité, les défauts d'alignement entre les arbres 4 et 5 et les oscillateurs minimes du second bras 13. Ces défauts sont absorbés en partie par la liberté de rotation relative entre les arbres 4 et 5. A noter que ces déformations et rotations minimes et les défauts de positionnement entre les arbres 4 et 5 ne devront pas excéder quelques dixièmes de millimètres et degrés.

Le second levier 13 est lié à la platine 14, par exemple, par trois articulations : deux articulations latérales 20 et une articulation médiane 21.

Les articulations latérales 20 sont formées chacune par une platine 22 fixée au bras 13, par une patte 23 fixée à la platine 14, s'étendant perpendiculairement à la dite platine 14 et à la dite platine 22 et par un tronçon de feuillard fixé à la patte 23 et à la platine 22.

L'articulation médiane 21 est formé par une patte 23 fixée à la platine 14 et s'étendant de manière perpendiculaire par rapport à cette dernière, par le levier 15 constitué par un élément plat et par un tronçon de feuillard fixé au levier 15 et à la patte 23.

Les tronçons de feuillard sont placés et orientés de sorte à permettre les oscillations du levier 3 selon un axe fictif et à n'être soumis qu'à des efforts -en statique-de traction ou de compression tenant compte en cela de la flexibilité du bras 13.

Les platines 22 des articulations latérales sont agencées pour recevoir des masses d'équilibrage destinées à équilibrer le dispositif par rapport à l'axe des arbres tournants 3 et 4.

Par ailleurs, la lame 12 est préférentiellement solidaire de la platine 22 de l'une des articulations latérales 20.

Le volant d'inertie 24 du système d'inertie associé à ce dispositif de mesure, et les arbres tournants 4 et 5 sont coaxiaux. Le volant d'inertie est monté de manière libre en rotation autour de l'un des deux arbres, par exemple l'arbre 4, et est calé en position le long du dit arbre.
Ce volant d'inertie reçoit son mouvement de rotation d'un troisième bras 25 parallèle à l'axe de rotation des arbres tournants 4 et 5 et disposé à distance de ce dernier. Le bras 25 est fixé par une de ses extrémités, de manière radiale, sur le second bras 13 et le dit bras 25 à distance du second bras 13 est engagé dans un orifice 26 pratiqué dans le volant 24 à distance de l'axe de rotation du dit volant. De préférence, à l'orifice 26 du volant 24 sont associées deux lames 27 formant une fente dans laquelle est engagée le bras 25, ce bras prenant appui sur l'une des bordures de la fente. Ces lames sont vissées sur le volant 24 et comportent chacune une saillie latérale 28 destinée au maintien latéral du troisième bras 25.

Le troisième bras 25 présente une section droite rectangulaire mince et est orienté en sorte d'absorber de façon optimale par élasticité les défauts d'alignements des arbres 4 et 5 et les oscillations minimes du second bras 13.

Ces défauts sont aussi dissipés en partie par la liberté de rotation entre le volant 24 et l'arbre 5.

Préférentiellement, le bras 25 par, une de ses extrémités, est fixé sur la platine 22 de l'une des articulations latérales 20 du second bras 13 à la platine 14.

Par référence à la figure 3, on va expliquer le fonctionnement du dispositif, l'arbre tournant 4 fait partie de l'ensemble moteur tandis que l'arbre 5 fait partie de la charge, le dispositif est freiné par la charge et l'accélération est positive. Lorsque l'arbre 4 tourne dans le sens de la flèche F1, le premier bras 11 applique sur le second bras 13, par l'intermédiaire de la lame 12 un moment de pivotement générateur sur le capteur 19, par l'intermédiaire du levier 15, de la biellette 16 et du doigt 17, d'un effort de poussée axial, l'intensité de cet effort de poussée étant représentative de la valeur du couple entre l'ensemble moteur et l'ensemble charge. Le troisième levier en entrainant en acccélération le volant d'inertie est soumis à une force que lui applique le volant par la face de son orifice 26. Cette force génère sur le deuxième bras 13 un couple de pivotement qui s'ajoute au précédent et qui génère sur le capteur, par l'intermédiaire du levier 15 de la biellette 16 et du doigt 17, un effort de poussée axial dont l'intensité est représentative de la valeur du couple absorbé par l'accélération angulaire des masses rotatives. On voit donc, dans ce cas que les valeurs absolues de l'intensité de ces deux efforts s'ajoutent et que le capteur délivre un signal représentatif de la valeur du couple recherché en endroit prédéterminé de la chaine cinématique de l'ensemble moteur.

Dans le cas où l'ensemble moteur comprend l'arbre 5 et l'ensemble charge comprend l'arbre 4 et si l'on considère le sens de rotation indiqué par la flèche F1 et que l'accélération est positive, le capteur 19 est soumis à un effort de traction dont l'intensité est représentative de la valeur du couple entre les arbres 4 et 5 et à un effort de poussée dont la valeur est représentative du couple absorbé par l'accélération des masses rotatives.

Dans ce cas, la valeur absolue de l'un de ces deux efforts est soustraite à l'autre.

Le rapport selon lequel la cinématique du dispositif de mesure du couple génère la force indicatrice du couple d'entrainement entre les arbres 4 et 5 dépend de la distance normales entre l'axe de l'arbre tournant 4 et la jonction du bras 11 avec la lame 12, de la distance normale entre cette jonction et l'axe fictif d'articulation du second bras 13 à la platine 14 et de la distance normale entre cet axe d'articulation et l'axe du doigt 17.

Le rapport selon lequel la cinématique du dispositif génère l'effort représentatif du couple absorbé par l'accélération des masses rotatives dépend de la distance normale entre l'axe de rotation du volant d'inertie et l'appui du bras 25 contre une des lames 27, de la distance normale entre cet appui et l'axe fictif de pivotement du second bras 13 et de la distance normale entre cet axe fictif et l'axe du doigt 17.

On comprend donc que par modification de l'une de ces distances normales est modifiée l'intensité de l'effort représentatif de la valeur du couple absorbé par l'accélération des masses rotatives et que cette modification permet d'adapter l'intensité de cet effort au moment d'inertie équivalent.

Préférentiellement, est modifiée la distance normale entre l'appui du troisième bras 25 et l'axe fictif d'articulation du second bras 13 à la platine 14.

A cet effet, le volant d'inertie 24 est monté de manière libre en rotation et fixe en translation sur une bague montée de manière libre en translation et rotation sur l'arbre tournant associé au volant, la dite bague (29) coopérant avec un mécanisme de réglage de la position du dit volant le long de l'arbre auquel il est associé.

Selon la forme préférée de réalisation, ce mécanisme de réglage comprend un bras d'actionnement, à fourche 30 engagé par sa fourche dans une rainure de la bague. Par ailleurs, ce bras est monté sur un axe 31 de guidage en translation parallèlement à l'axe des arbres 4 et 5 et coopère avec un mécanisme à vis-écrou 32 dont la vis est solidaire d'une patte fixée au châssis et est libre en rotation et fixe en translation par rapport à cette patte. L'écrou du système est fixé sur le bras 30. Ainsi, par rotation de la vis, le bras 30 est déplacé en translation, ce qui a pour effet de déplacer le volant d'inertie le long de l'arbre 4.

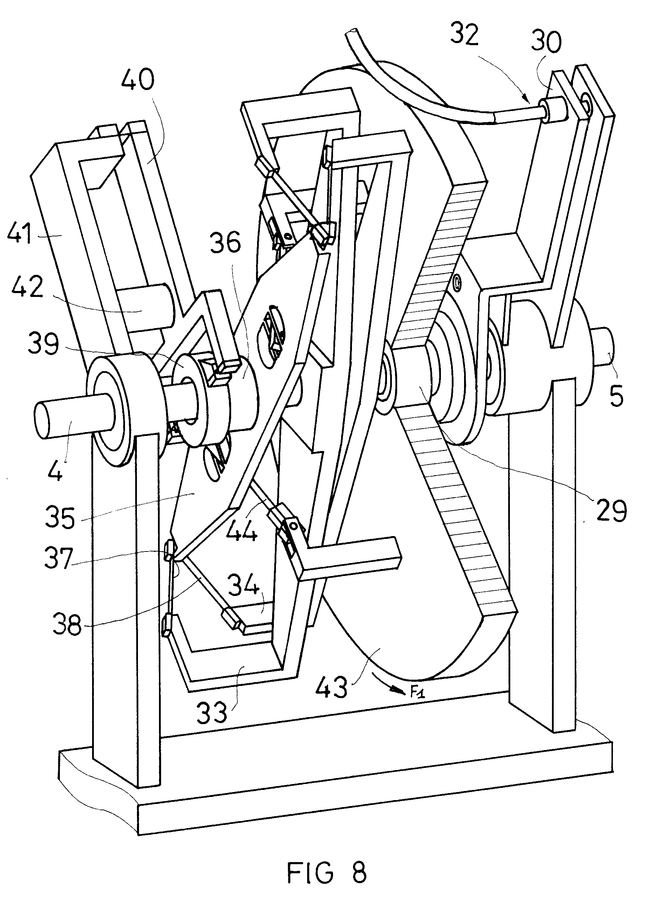

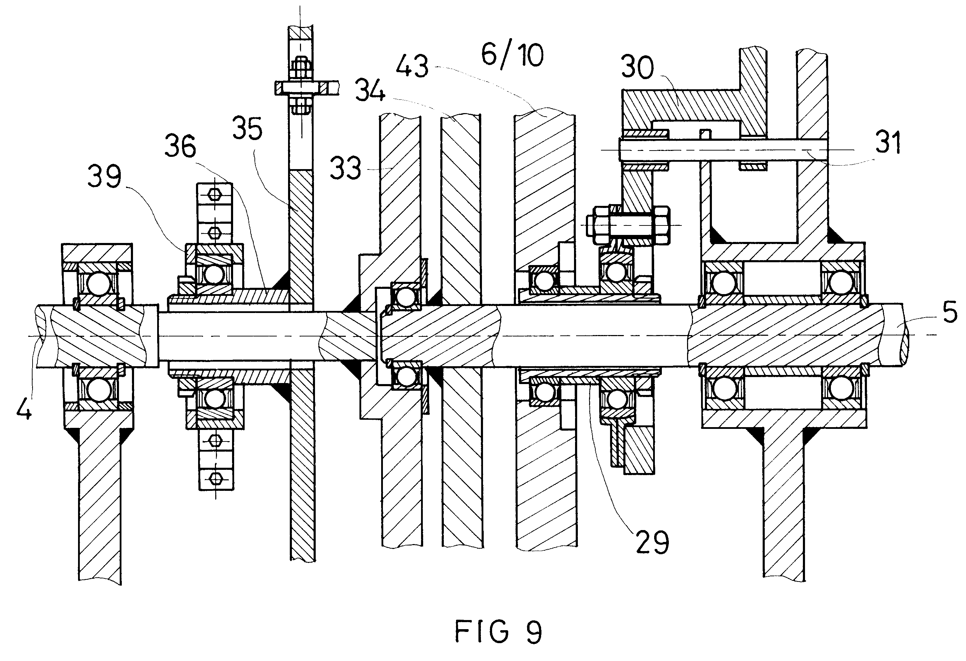

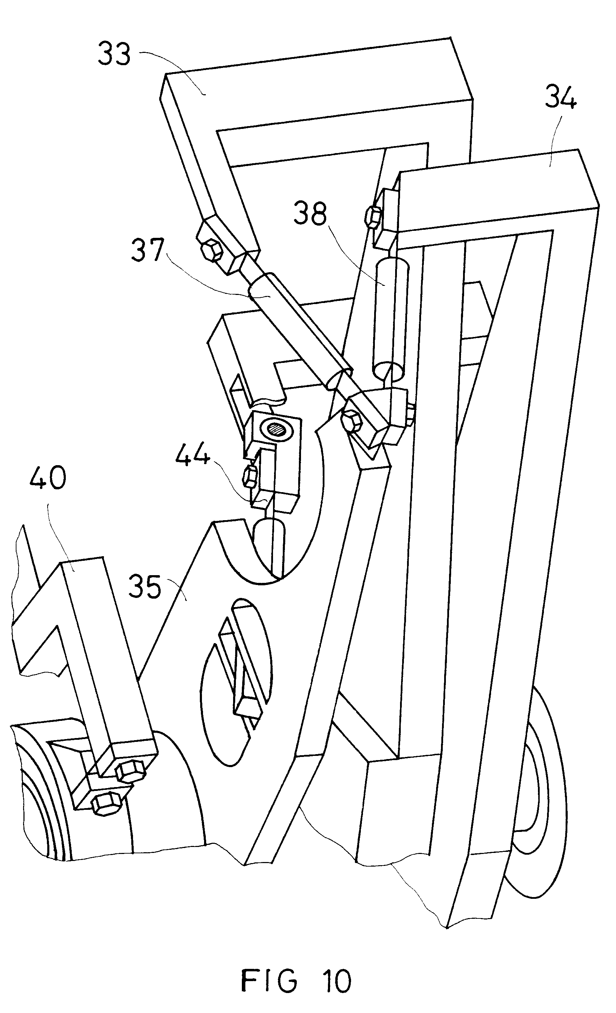

En figures 8 à 10 est représenté au dispositif selon une seconde forme de réalisation.

Ce dispositif est intercalé entre les arbres tournants 4 et 5, la transmission du mouvement de rotation d'un arbre à l'autre étant assurée par le moyen de mesure du couple entre ces deux arbres. Ce moyen comprend : - un premier bras (33) fixé en extrémité d'un des arbres tournants et un deuxième bras (34) fixé en extrémité de l'autre arbre tournant, les deux bras (33), (34) étant perpendiculaires à l'axe de l'arbre auquel ils sont chacun fixés et se développent chacun de manière symétrique par rapport au dit axe,
- un troisième bras (35) pourvu d'un fourreau central (36) par lequel il s'engage de manière libre en translation et rotation autour d'un des arbres tournants, le dit troisième bras (35) étant perpendiculaire à l'axe des arbres tournants et se développe de manière symétrique par rapport au dit axe,
- deux groupes de biellettes liant les uns aux autres les premier (33), deuxième (34) et troisième bras (35), chaque groupe étant constitué de deux biellettes (37), (38) articulées chacune par une de leur extrémité à l'extrémité correspondante du troisième bras (35), les deux biellettes se développant suivant les côtés d'un triangle, lequel se développe suivant un plan parallèle à l'axe des arbres tournants, une des deux biellettes par son extrémité étant articulée en extrémité du premier bras tandis que l'autre est articulée par son autre extrémité en extrémité du deuxième bras,
- une bague (39) montée de manière libre en rotation sur le fourreau (36) et bloquée axialement par rapport à ce dernier,
- un levier (40) terminé par une fourche, articulé d'une part par les extrémités des branches de la fourche à la bague (39) et d'autre part, par son extrémité située à distance de la fourche à une patte (41) solidaire du châssis, l'articulation du levier à la patte du châssis étant située à distance de l'axe des arbres tournants,
- un capteur d'effort (42) disposé entre la patte (41) et le levier (40) et soumis à un effort que lui communique le levier, le dit capteur (42) délivrant un signal dont l'amplitude est représentative de l'effort qui lui est appliqué.

Le premier bras 33 est fixé en extrémité de l'arbre 4 tandis que le deuxième bras 36 est fixé en extrémité de l'arbre 5.

Les biellettes 37 sont montées entre le premier bras 33 et le troisième bras 35 tandis que les biellettes 38 sont montées entre le deuxième bras 34 et le troisième bras 35.

A titre d'exemple, les deux extrémités des bras 33 et 34 sont coudées à angle droit, les biellettes 37 et 38 venant s'articuler sur les extrémités coudées des bras 33 et 34.
Le triangle suivant lequel se développe les biellettes 37 et 38 est de préférence isocèle.

De préférence, les articulations des biellettes 37 et 38 aux différents bras 33, 34 et 35 sont réalisées chacune par une lame flexible orientée convenablement, fixée d'une part à la biellette correspondante et d'autre part aux bras correspondants.

Le volant d'inertie 43 du système d'inertie associé à ce moyen de mesure de couple entre l'ensemble moteur et l'ensemble charge et les arbres tournants 4 et 5 sont coaxiaux. Le volant d'inertie 43 est monté de manière libre en rotation autour de l'un des deux arbres de préférence l'arbre 5 et est calé en position le long du dit arbre.

Le volant d'inertie 43 est entrainé en rotation par le troisième bras 35 par l'intermédiaire d'au moins deux biellettes 44 liées par des articulations rotules d'une part au troisième bras et d'autre part au volant 43.

Chaque biellette 43 par son axe longitudinal est orientée de manière oblique par rapport à un plan géométrique perpendiculaire à l'axe de rotation du volant 43.

En se référant à la figure 8, on va expliquer le fonctionnement de ce dispositif. L'arbre 4 fait partie de l'ensemble moteur 2 et l'arbre 5 fait partie de l'ensemble charge 3. Le sens de rotation est celui indiqué par la flèche. L'ensemble 2 est freiné par la charge 3 et l'accélération angulaire est positive. L'arbre 4 entraine en rotation le premier bras 33 et ce dernier par l'intermédiaire des biellettes 37 entraine en rotation le troisième bras 35. Les biellettes 37 sont soumises à un effort de traction. Le bras 35 par l'intermédiaire des biellettes 38 entraine en rotation le deuxième bras 34 et le mouvement de rotation du dit bras 34 est communiqué à l'arbre 5. Les biellettes 38 sont soumises à un effort de compression. Les composantes axiales des efforts appliqués par les biellettes 37 et 38 sur le troisième bras 35 sont de direction parallèle à l'axe de rotation du dit bras et sont de même sens. La résultante de ces composantes axiales est appliquée par l'intermédiaire du fourreau 36 sur la bague 39 laquelle transmet cet effort résultant au levier à fourche 40, lequel applique un effort de compression sur le capteur 42. L'intensité de cet effort de compression est représentative de la valeur du couple entre les arbres 4 et 5. Les biellettes 44 liant le volant d'inertie 43 au troisième bras 44 sont soumises à des efforts de compression. La composante axiale de l'action exercée par chaque biellette 44 sur le troisième bras 35 est de direction parallèle à l'axe de rotation du bras 35. La résultante des actions axiales des biellettes 44 sur le bras 35 est transmise au levier à fourche par l'intermédiaire du bras 35, de son fourreau 36 et de la bague 39. Le capteur d'effort est donc soumis à un second effort qui s'additionne algébriquement au premier, ce second effort étant représentatif du couple absorbé par l'accélération des masses rotatives.

Dans le cas présenté, les différentes composantes axiales sont de même sens et le capteur d'effort délivre un signal dont l'amplitude est représentative du résultat de l'addition des valeurs absolues des deux efforts appliqués sur le capteur et donc de la valeur du couple recherché en un endroit prédéterminé de l'ensemble moteur 2.

Ce dispositif est réversible et peut être utilisé pour mesurer le couple absorbé par une machine.

Dans ce cas de figure, l'arbre 5 fait partie de l'ensemble moteur et l'arbre 4 de l'ensemble charge ou machine. En considérant le sens de rotation indiqué par la flèche, l'accélération étant toujours positive, les biellettes 38 sont soumises à un effort de traction tandis que les biellettes 37 sont soumises à un effort de compression et la résultante des composantes axiales des actions exercées par les biellettes 37 et 38 sur le bras 3 est de sens contraire que précédemment si bien que le levier à fourche applique sur le capteur 42 un effort de traction.

L'intensité de cet effort est représentative du couple entre l'arbre 5 et l'arbre 4. Les biellettes 44 sont toujours soumises à des efforts de compression et la résultante des composantes axiales des actions des biellettes 44 sur le bras 35 génèrera sur le capteur un effort de compression dont l'intensité est représentative du couple consommé par l'accélération des masses rotatives.

Le capteur délivre donc un signal dont l'amplitude sera représentative du résultat de la soustraction entre les valeurs absolues des deux efforts auquel il est soumis.

L'intensité de la composante axiale de l'action exercée par chaque biellette 44 sur le bras 35 dépend de l'inclinaison de l'axe longitudinal de cette biellette par rapport à un plan perpendiculaire à l'axe de rotation des arbres 4 et 5. On voit donc que par variation de la valeur de cette inclinaison est modifiée l'intensité de la résultante des composantes axiales des actions des biellettes 44 sur le bras 35. Par variation de cette inclinaison, on peut donc adapter l'intensité de cette résultante au moment d'inertie équivalent des masses rotatives devant être prises en compte pour la mesure du couple absorbé par leur accélération.

Avantageusement, la modification de l'inclinaison est opérée par modification de la valeur de l'écart entre le bras 3 et le volant. Pour cette raison, le volant d'inertie 43 est monté de manière libre en rotation et fixe en translation sur une bague 29 montée de manière libre en rotation et libre en translation sur l'arbre tournant associé au volant, c'est-à-dire l'arbre 5, et cette bague coopère avec un mécanisme de réglage de la position du dit volant le long de l'arbre 5. Ce mécanisme de réglage est fonctionnellement identique à celui décrit précédemment et est associé à une patte du châssis.

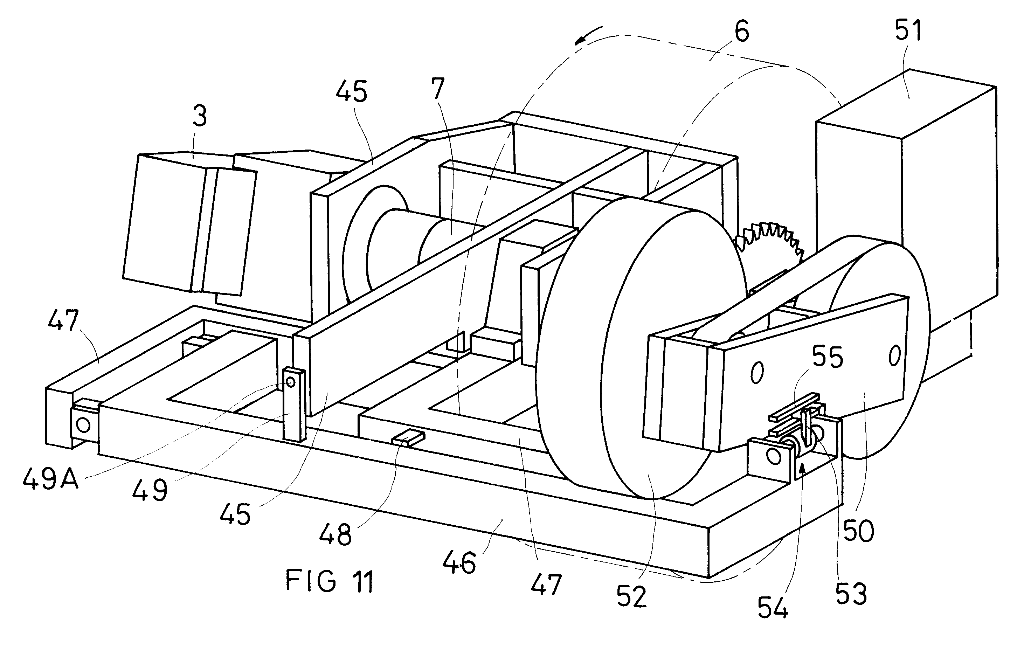

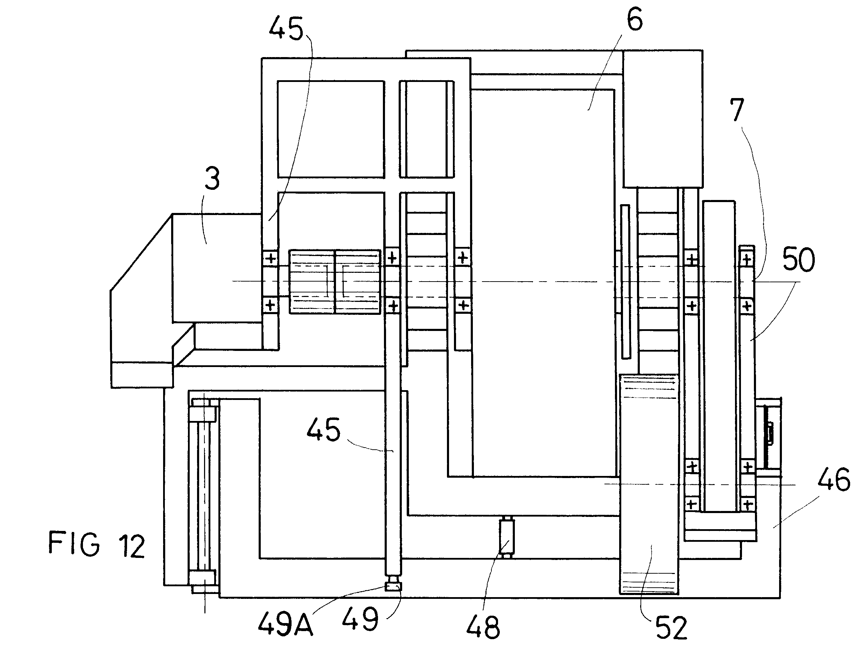

En figures 11 et 12 est représentée une troisième forme de réalisation du dispositif de mesure.

Selon cette forme de réalisation, l'ensemble moteur et l'ensemble charge sont reliés cinématiquement par l'arbre 7 tournant et le moyen de mesure de couple entre l'ensemble moteur et l'ensemble charge est solidaire d'un des organes de l'ensemble moteur ou de l'ensemble charge, le dit arbre tournant 7 étant monté dans deux paliers d'un châssis rigide 47 supportant le dispositif de mesure de couple.

Selon cette forme de réalisation, le moyen de mesure du couple entre l'ensemble moteur 2 et l'ensemble charge 3 comprend un premier bras (45), monté de manière libre en rotation autour de l'arbre (7) reliant l'ensemble charge à l'ensemble moteur, et pouvant osciller autour de l'axe du dit arbre, lequel bras (45) reçoit en fixation le stator du moteur ou de la charge dont l'axe du rotor est accouplé à l'arbre 7, le dit bras (45) étant solidaire par l'intermédiaire d'une articulation 49A, d'un second bras (46) articulé au châssis (47) suivant un axe d'articulation perpendiculaire à l'axe de l'abre tournant (7) et situé à distance de l'articulation, un capteur d'effort (48) étant disposé entre le second bras (46) et le châssis fixe (47), le dit capteur d'effort délivrant un signal dont l'amplitude est représentative de la valeur de l'intensité de l'effort appliqué.

Le stator et le bras 45 pourront être équilibrés par rapport à l'axe de l'arbre tournant 7. Le bras 45 pourra être solidaire par une articulation d'un doigt vertical 49 fixé par son extrémité inférieure au second bras 46, le doigt 49 étant situé à distance de l'axe d'articulation du bras 46 au châssis 47.

Le système d'inertie associé à ce moyen de mesure du couple comprend un châssis oscillant (50) monté de manière libre en rotation autour de l'axe de l'arbre tournant (7) et à distance de l'axe d'articulation du second bras (46) au châssis 47, le dit châssis oscillant (50) se développant de manière perpendiculaire à l'axe du dit arbre (7) et recevant une masse d'équilibrage (51), la transmission du mouvement de rotation entre l'arbre (7) et le volant d'inertie (52) du système d'inertie étant supportée en partie par le châssis oscillant (50), lequel est solidaire d'un doigt vertical (53) de transmission d'effort, relié au second bras (46) à distance de l'axe d'articulation du second bras (46) au châssis fixe (47).

Selon une première forme de réalisation, la transmission de mouvement entre l'arbre 7 et le volant d'inertie comprend une première poulie de grand diamètre calée sur l'arbre 7, une seconde poulie de petit diamètre calée sur un axe monté dans des paliers du châssis oscillant situé à distance de la première poulie et une courroie de transmission coopérant en entrainement avec les deux poulies. Sur l'axe de la seconde poulie est calé le volant d'inertie.

En variante, la transmission par poulie et courroie peut être remplacée par des pignons dentés.

Selon une autre forme de réalisation, le volant d'inertie est monté de manière libre en rotation sur l'arbre 7 et le châssis oscillant, à distance de l'axe de l'arbre 7, est équipé d'un arbre monté sur palier, sur lequel sont calés deux pignons dont un de petit diamètre coopère en engrènement avec un pignon de grand diamètre calé sur l'arbre 7 et dont l'autre de grand diamètre coopère avec un pignon de petit diamètre calé sur le volant d'inertie 52. Cette forme de réalisation présente l'avantage d'une moindre inertie du châssis 50.

En se référant à la figure 11, on va expliquer le fonctionnement de ce dispositif, l'ensemble moteur étant freiné par la charge et l'accélération angulaire étant positive.

Le premier bras 45 reçoit en fixation le stator de la charge qui peut être constituée, dans ce cas particulier par une pompe hydraulique connectée à un circuit hydraulique approprié. Le mouvement moteur de rotation est transmis à l'arbre 7 par l'intermédiaire du rouleau 6 calé sur l'arbre 7. Cet arbre 7 fait partie de l'ensemble moteur.

Le couple entre l'arbre 7 et la charge est transmis au premier bras 45 par le stator de la charge. Le bras 45 applique sur le second bras 46 une force générant un couple générant lui-même un effort sur le capteur d'effort 48, l'intensité de cet effort étant représentative de la valeur du couple entre l'ensemble moteur et l'ensemble charge.

Par la résultante des forces auquel il est soumis par l'entrainement du volant, le châssis oscillant 50 du système d'inertie est soumis à un couple et exerce en conséquence sur le doigt vertical 53 un effort qui est transmis au second bras 46.

Cet effort génère un couple sur le bras 46, générateur d'un second effort au niveau du capteur 48, l'intensité de ce second effort étant représentative de la valeur du couple absorbé par l'accélération des masses rotatives.

Le capteur d'effort délivrera un signal dont l'amplitude est représentative du résultat de l'addition des valeurs absolues des intensités de ces deux efforts et donc de la valeur du couple recherché en un endroit prédéterminé de l'ensemble moteur.
Ce dispositif est également réversible, l'accélération étant toujours positive et le bras 45 reçoit en fixation le stator d'un moteur qui peut être un moteur électrique ou bien un moteur hydraulique.

Dans ce cas particulier, le premier bras 45 et le châssis 50 génèrent sur le bras 46 deux couples de sens opposés si bien qu'au niveau du capteur il n'y a plus addition des valeurs absolues des deux efforts mais soustraction de l'une de ces valeurs, de l'autre. Le capteur 48 délivrera un signal dont l'amplitude est représentative de la valeur du couple en un endroit prédéterminé de l'ensemble charge.

On comprend que l'intensité du couple transmis au second bras 46 par le châssis oscillant dépend de l'intensité de l'effort appliqué sur le doigt 53 et que cette intensité dépend de la distance normale entre ce doigt et l'axe de l'arbre 7. Ainsi, par modification de cette distance normale est modifiée la valeur du couple transmis au bras 46. On voit donc que par modification de cette distance il est possible d'adapter l'intensité de l'effort appliqué sur le doigt 53 à la valeur du moment d'inertie équivalent des masses tournantes devant être prises en compte pour mesure le couple absorbé.

A cet effet, le doigt vertical 53 comporte en extrémité supérieure un pion horizontal engagé en coulissement dans un rail (55) fixé au châssis oscillant 50, le dit doigt vertical (53) étant fixé sur un système de réglage (54) de l'écartement du pion, de l'axe d'oscillation du châssis oscillant.

Préférentiellement, le système de réglage sera constitué par une douille taraudée recevant en fixation le doigt 53. Cette douille taraudée coopèrera avec une tige filetée montée de manière libre en rotation et fixe en translation entre les ailes d'une chape fixée au bras 46.

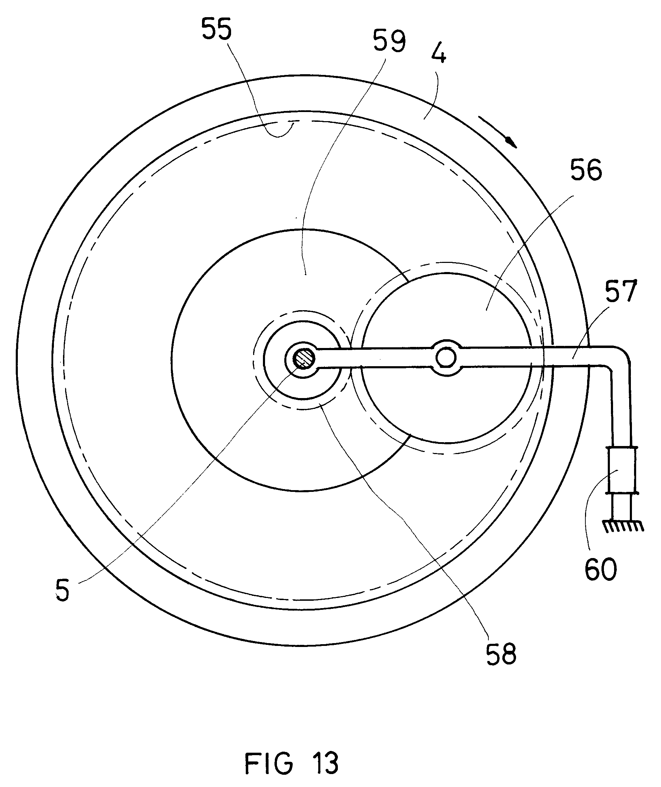

En figure 13, on a représenté une quatrième forme de réalisation du dispositif selon l'invention.

Selon cette forme de réalisation, le dispositif est associé aux deux arbres tournants coaxiaux 4 et 5. Le premier arbre tournant 4 peut être creux et reçoit en fixation un engrenage cylindrique 55 coopérant en engrènement avec un pignon satellite (56) dont l'axe est monté en fixation sur un bras (57) articulé autour de l'axe commun des deux arbres tournants, le dit pignon satellite (56) coopérant en engrènement avec un pignon (58) calé sur le second arbre tournant (5) et le second arbre tournant (5) étant équipé d'un volant d'inertie (59), le dit bras (57), à distance de son axe d'articulation, coopérant avec un capteur d'effort (60) solidaire d'un point fixe du bâti.

Selon une forme préférée de réalisation, l'engrenage cylindrique 55 est à denture interne, le pignon satellite étant à denture externe.

Selon encore une autre forme de réalisation, le volant d'inertie est monté dans l'arbre creux.

L'amplitude du signal délivré par le capteur d'effort est représentative de l'addition algébrique du couple entre les arbres 4 et 5 et du couple absorbé par l'accélération des masses rotatives qui doivent être prises en considération pour la mesure du couple en un endroit déterminé.

L'adaptation de ce dispositif au moment d'inertie équivalent de ces masses peut être réalisée par modification de la valeur du moment d'inertie d'un des organes qu'il comporte, cette modification pouvant être opérée par ajoût ou retrait de masses annexes amovibles.

Le dispositif tel que décrit peut être équipé d'un mécanisme de freinage entre le volant d'inertie 59 et l'arbre 4 ou bien d'un moteur entre l'arbre 4 et le volant d'inertie 59, dans ce cas particulier, le stator et le rotor du dit moteur étant tous deux rotatifs.

On va expliquer maintenant le fonctionnement du dispositif, en considérant que ce dispositif est en accélération et freiné, la force de freinage diminuant progressivement.L'arbre 4 entraine en rotation l'arbre 5 et le volant par les engrenages 55, 56 et 58. Les forces d'engrènement entre les engrenages 55 et 56 et entre les engrenages 56 et 58, égales, provoquent un couple sur le bras 57 qui exerce alors une force de compression sur le capteur 60. Le freinage entre le volant d'inertie et l'arbre 4 provoque un couple sur l'arbre 4 antagoniste mais d'intensité moindre que le couple moteur appliqué sur l'arbre 4. La force d'engrènement entre les engrenages 55 et 56 et entre les engrenages 56 et 58 est donc fonction du couple moteur moins le couple freinage, ces deux couples étant appliqués tous deux sur l'arbre 4. Si l'intensité du freinage diminue, à couple moteur égal, le résultat de la soustraction ci-dessus définie serait plus élevé. Cet accroissement serait représentatif du couple absorbé par l'accroisement de l'accélération des masses rotatives suite à la diminution de l'effort de freinage, en fait, de part l'accroissement de l'accélération angulaire de l'ensemble de la chaine cinématique, le couple moteur restant disponible sur l'arbre 4 diminuera à cause du couple absorbé par cet accroissement d'accélération. Le résultat de la soustraction ci-dessus évoquée demeurera inchangé, les deux termes ayant diminués d'autant.

Il faut noter que l'amplitude du signal délivré par les différents capteurs est multipliée par un coefficient correcteur pour tenir compte d'une part des rendements des transmissions et d'autre part des efforts absorbés par les déformations élastiques de certaines pièces composant le dit dispositif.

Par ailleurs, il faut noter que le capteur d'effort peut être constitué par un capteur de force, par un élément sousmis à déformation élastique associé à une jauge de contrainte ou bien par un élément soumis à déplacement élastique associé à un dispositif de mesure de ce déplacement ou bien par tout autre système.

## Revendications

1. Dispositif (1) de mesure de couple en régime de rotation transitoire disposé entre un ensemble moteur (2) et un ensemble charge (3), la transmission du mouvement de rotation entre l'ensemble moteur et l'ensemble charge étant assurée par le dit dispositif de mesure ou bien par un arbre tournant accouplé (7) à ces deux ensembles, l'ensemble moteur (2) étant constitué d'un moteur et pouvant comporter une première chaine cinématique de transmission du mouvement de rotation entre le moteur et le dispositif de mesure ou l'arbre tournant et éventuellement au moins une deuxième chaine cinématique de transmission du mouvement de rotation entre un des organes rotatifs de la première chaine cinématique et un organe récepteur, l'ensemble charge (3) étant constitué d'une charge et pouvant comporter une première chaine cinématique de transmission du mouvement de rotation entre la charge et le dispositif de mesure ou l'arbre tournant (7) et éventuellement au moins une deuxième chaine cinématique de transmission du mouvement de rotation entre un des organes rotatifs de la première chaine cinématique de l'ensemble charge et un autre organe récepteur, le dit dispositif indiquant la valeur du couple qui est appliqué en un endroit prédéterminé de l'une quelconque première chaine cinématique, au rendement de transmission près valeur du couple qui serait appliqué sur le dit dispositif au rendement de transmission près, si la mesure pouvait être effectuée en régime rigoureusement stationnaire caractérisé en ce qu'il comporte :
- un moyen de mesure de la valeur du couple entre l'ensemble moteur et l'ensemble charge,
- un moyen de mesure de la valeur du couple absorbé ou restitué d'une part, par l'accélération angulaire de masses rotatives intermédiaires situées entre le moyen de mesure du couple entre l'ensemble charge et l'ensemble moteur et l'endroit de la première chaine cinématique où l'on veut connaître le couple et d'autre part éventuellement par l'accélération angulaire des masses rotatives de la deuxième chaine cinématique en prise avec cette première chaine cinématique,
- un moyen pour additionner algébriquement ces deux valeurs et délivrer sous forme de signal le résultat de cette addition, la valeur résultat de cette addition algébrique étant représentative de la valeur du couple à l'endroit prédéterminé, l'addition algébrique corrigeant donc l'erreur venant de l'intégration ou de la non-intégration, selon que l'endroit appartient à l'ensemble moteur ou à l'ensemble charge, du couple consommé par l'accélération des masses rotatives précitées.

2. Dispositif selon la revendication 1 caractérisé en ce que la transmission de mouvement entre l'ensemble moteur et l'ensemble charge est assurée par le moyen de mesure du couple entre ces deux ensembles, le dit moyen de mesure étant accouplé à deux arbres tournants (4), (5) coaxiaux montés sur des paliers d'un bâti fixe, un des arbres faisant partie de l'ensemble moteur (2) et l'autre de l'ensemble charge (3) , le moyen de mesure assurant la transmission du mouvement de rotation entre ces deux arbres tournants (4), (5).

3. Dispositif selon la revendication 1 comportant un arbre (7) tournant, reliant cinématiquement l'ensemble moteur à l'ensemble charge caractérisé en ce que le moyen de mesure de couple entre l'ensemble moteur et l'ensemble charge est solidaire d'un des organes de l'ensemble moteur ou de l'ensemble charge, le dit arbre tournant (7) étant monté dans deux paliers d'un châssis rigide fixe supportant le dispositif (1) de mesure de couple.

4. Dispositif selon la revendication 1 comportant un arbre reliant cinématiquement l'ensemble moteur à l'ensemble charge caractérisé en ce que le moyen de mesure de couple entre l'ensemble moteur et l'ensemble charge est un torsiomètre monté sur le dit arbre.

5. Dispositif de mesure de couple selon l'une quelconque des revendications 1 à 4 caractérisé en ce que le moyen de mesure de la valeur du couple absorbé ou restitué par l'accélération angulaire des masses rotatives comprend un système d'inertie composé notamment d'un volant d'inertie rotatif entrainé en rotation par une transmission de mouvement, laquelle reçoit le mouvement à transmettre de l'ensemble moteur (2) ou de l'ensemble charge (3) ou de l'arbre rotatif (7) reliant les deux ensembles, la cinématique du dit système générant un effort dont la valeur est représentative du couple absorbé ou restitué par l'accélération angulaire des masses rotatives.

6. Dispositif selon la revendication 5 caractérisé en ce que la cinématique générant l'effort représentatif du couple absorbé par l'accélération angulaire des masses rotatives est modifiable afin d'adapter l'intensité de cet effort au moment d'inertie équivalent des masses précitées.

7. Dispositif selon la revendication 2 caractérisé en ce que le moyen de mesure de couple entre les deux arbres tournants (4) et (5) appartenant respectivement à l'ensemble moteur et l'ensemble charge comprend un premier bras (11) fixé radialement par une de ses extrémités à l'un des arbres tournants, une lame (12) perpendiculaire au dit bras articulée, à distance de l'arbre, par une de ses extrémités au dit bras (11) et fixée par son autre extrémité à un second bras (13) perpendiculaire à l'axe des arbres tournants (4) et (5) et articulé, suivant un axe perpendiculire à l'axe des arbres tournants (4) et (5), à une platine (14) montée en fixation en extrémité de l'autre arbre tournant, au dit bras articulé (13) étant fixé un levier (15) en extrémité libre duquel et à distance de l'axe d'articulation du second bras (13), est articulée une biellette (16) articulée par son autre extrémité en extrémité d'un doigt (17) monté de manière mobile dans un logement axial (18) pratiqué dans le second arbre (5) et agissant sur un capteur d'effort (19) monté dans le dit logement axial (18), le dit capteur d'effort délivrant un signal dont la valeur de l'amplitude est représentative de l'intensité de l'effort que le doigt (17) lui applique.

8. Dispositif selon la revendication 2 caractérisé en ce que le moyen de mesure du couple entre les deux arbres tournants comprend :
- un premier bras (33) fixé en extrémité d'un des arbres tournants (4) ou (5) et un deuxième bras (34) fixé en extrémité de l'autre arbre tournant, les deux bras (33), (34) étant perpendiculaires à l'axe de l'arbre auquel ils sont chacun fixés et se développant chacun de manière symétrique par rapport au dit axe,
- un troisième bras (35) pourvu d'un fourreau central (36) par lequel il s'engage de manière libre en translation et rotation autour d'un des arbres tournants, le dit troisième bras (35) étant perpendiculaire à l'axe des arbres tournants (4), (5) et se développant de manière symétrique par rapport au dit axe,
- deux groupes de biellettes liant les uns aux autres les premier (33), deuxième (34) et troisième bras (35) chaque groupe étant constitué de deux biellettes (37), (38) articulées chacune par une de leurs extrémités à l'extrémité correspondante du troisième bras (35), les deux biellettes se développant suivant les côtés d'un triangle lequel se développe suivant un plan parallèle à l'axe des arbres tournants, une des deux biellettes par son extrémité étant articulée en extrémité du premier bras tandis que l'autre est articulée par son autre extrémité en extrémité du deuxième bras,
- une bague (39) montée de manière libre en rotation sur le fourreau (36) et bloquée axialement par rapport à ce dernier,
- un levier (40) terminé par une fourche, articulé d'une part par, les extrémités des branches de la fourche à la bague (39) et d'autre part, par son extrémité située à distance de la fourche, à une patte (41) solidaire du châssis, l'articulation du levier à la patte du châssis étant située à distance de l'axe des arbres tournants,
- un capteur d'effort (42) disposé entre la patte (41) et le levier (40) et soumis à un effort que lui communique le levier, le dit capteur (42) délivrant un signal dont l'amplitude est représentative de l'effort qui lui est appliqué.

9. Dispositif selon les revendications 5, 7 et 8 caractérisé en ce que le volant d'inertie (24) ou (43) du système d'inertie et les arbres tournants (4) et (5) sont coaxiaux et que le volant d'inertie (24) ou (43) est monté de manière libre en rotation autour de l'un des deux arbres, (4) ou (5) le dit volant d'inertie étant calé en position le long du dit arbre.

10. Dispositif selon les revendications 7 et 9 caractérisé en ce que le volant d'inertie (24) est monté de manière libre en rotation sur l'arbre (4) ou (5) auquel est fixé le premier bras (11) et que le volant d'inertie (24) reçoit son mouvement de rotation d'un troisième bras (25) parallèle à l'axe de rotation des arbres tournants (4) et (5) et disposé à distance de ce dernier, le dit bras (25) étant fixé par une de ses extrémités de manière radiale sur le second bras (13), le dit troisième bras (25), à distance du second bras (13), étant engagé dans un orifice (26) pratiqué dans le volant (24) à distance de l'axe de rotation du dit volant.

11. Dispositif selon les revendications 8 et 9 caractérisé en ce que le volant d'inertie (43) est monté de manière libre en rotation sur l'arbre (5) et est entrainé en rotation par le troisième bras (35) et ce par l'intermédiaire d'au moins deux biellettes (44) liées par des articulations rotules d'une part au troisième bras (35) et d'autre part au dit volant (43), l'axe longitudinal de chaque biellette (44) étant oblique par rapport à un plan perpendiculaire à l'axe de rotation.

12. Dispositif selon les revendications 6, 9, 10 et 11 caractérisé en ce que le volant d'inertie (24), (43) est monté de manière libre en rotation et fixe en translation sur une bague (29) montée de manière libre en rotation et translation sur l'arbre tournant associé au volant, la dite bague (29) coopérant avec un mécanisme de réglage de la position du dit volant le long de l'arbre auquel il est associé.

13. Dispositif selon la revendication 3 caractérisé en ce que le moyen de mesure du couple entre l'ensemble charge (3) et l'ensemble moteur (2) comprend un premier bras (45), monté de manière libre en rotation autour de l'arbre (7) reliant l'ensemble charge à l'ensemble moteur, et pouvant osciller autour de l'axe du dit arbre, lequel bras (45) reçoit en fixation le stator du moteur ou de la charge dont l'axe du rotor est accouplé à l'arbre (7), le dit bras (45) étant solidaire par l'intermédiaire d'une articulation (49A) d'un second bras (46) articulé au châssis (47) suivant un axe d'articulation perpendiculaire à l'axe de l'abre tournant (7) et situé à distance de l'articulation (49A), un capteur d'effort (48) étant disposé entre le second bras (46) et le châssis fixe (47), le dit capteur d'effort délivrant un signal dont l'amplitude est représentative de la valeur de l'intensité de l'effort appliqué.

14. Dispositif de mesure de couple selon les revendications 5 et 13 caractérisé en ce que le système d'inertie comprend un châssis oscillant (50) monté de manière libre en rotation autour de l'axe de l'arbre tournant (7) et à distance de l'axe d'articulation du second bras (46) au châssis (47), le dit châssis oscillant (50) se développant de manière perpendiculaire à l'axe du dit arbre (7) et recevant une masse d'équilibrage (51), la transmission du mouvement de rotation entre l'arbre (7) et le volant d'inertie (52) du système d'inertie étant supportée en partie par le châssis oscillant (50), lequel est solidaire d'un doigt vertical (53) de transmission d'effort relié au second bras (46) à distance de l'axe d'articulation du second bras (46) au châssis fixe (47).

15. Dispositif selon les revendications 6 et 14 caractérisé en ce que le doigt vertical (53) comporte en extrémité supérieure un pion horizontal engagé en coulissement dans un rail (55) fixé au châssis oscillant (50), le dit doigt vertical (53) étant fixé sur un système de réglage (54) de l'écartement entre le pion et l'axe d'oscillation du châssis oscillant (50).

16. Dispositif selon la revendication 1 caractérisé en ce qu'il est associé à deux arbres tournants (4), (5) coaxiaux et que le premier arbre tournant est creux et reçoit en fixation un engrenage (55) cylindrique coopérant en engrènement avec un pignon satellite (56) dont l'axe est monté en fixation sur un bras (57) articulé autour de l'axe commun des deux arbres tournants, le dit pignon satellite (56) coopérant en engrènement avec un pignon (58) calé sur le second arbre tournant (5) et le second arbre tournant (5) étant équipé d'un volant d'inertie (59), le dit bras (57), à distance de son axe d'articulation et de l'axe support du pignon satellite (56), coopérant avec un capteur d'effort (60) solidaire d'un point fixe du bâti.

17. Dispositif selon la revendication 16 caractérisé par un mécanisme de freinage ou par un moteur entre le volant d'inertie (59) et l'arbre (4).
